## Europäisches Patentamt

## European Patent Office

## Office européen des brevets

(19)

(11) Veröffentlichungsnummer: **0 072 474**
**B1**

(12)

# EUROPÄISCHE PATENTSCHRIFT

(45) Veröffentlichungstag der Patentschrift:
**16.10.85**

(51) Int. Cl.⁴: **C 08 L 83/04**

(21) Anmeldenummer: **82106876.4**

(22) Anmeldetag: **30.07.82**

(54) **Hitzehärtbare Organopolysiloxan-Mischungen.**

(30) Priorität: **11.08.81 DE 3131734**

(43) Veröffentlichungstag der Anmeldung:
**23.02.83 Patentblatt 83/8**

(45) Bekanntmachung des Hinweises auf die Patenterteilung:
**16.10.85 Patentblatt 85/42**

(84) Benannte Vertragsstaaten:
**BE DE FR GB IT SE**

(56) Entgegenhaltungen:
**EP - A - 0 015 346**
**GB - A - 2 000 165**
**US - A - 2 837 494**

(73) Patentinhaber: **BAYER AG, Konzernverwaltung RP**
**Patentabteilung, D-5090 Leverkusen 1 Bayerwerk (DE)**

(72) Erfinder: **Schlak, Ottfried, Dr.,**
**Carl-Duisberg-Strasse 331, D-5090 Leverkusen 1 (DE)**
Erfinder: **Michel, Werner, Dr., Hahnenweg 1,**
**D-5000 Köln 80 (DE)**
Erfinder: **Munchenbach, Bernard, Dr.,**
**Carl-Rumpff-Strasse 8, D-5090 Leverkusen 1 (DE)**

## Beschreibung

Die vorliegende Erfindung bezieht sich auf Platin-katalysierte hitzehärtbare Organopolysiloxan-Mischungen, die durch Anlagerung von Si-gebundenem Wasserstoff an aliphatische Mehrfachbindung härtbar sind, wobei der Platinkatalysator in einer festen Substanz enthalten ist, deren Erweichungspunkt bzw. Schmelzpunkt zwischen 70 und 250°C liegt und die in dem Rest der Mischung dispergiert ist. Solche Organopolysiloxan-Mischungen weisen bei Raumtemperatur eine gute Lagerstabilität auf und härten schnell bei Temperaturen oberhalb des Erweichungs- bzw. Schmelzpunktes der festen Substanz, die den Katalysator enthält.

Organopolysiloxan-Mischungen, die durch Anlagerung von Si-gebundenem Wasserstoff an aliphatische Mehrfachbindung härtbar sind, wobei diese Anlagerung durch Platin oder Platin-Verbindungen katalysiert wird, sind wohlbekannt (z.B. US-PS 2 823 218, Unionspriorität: 05.12.1955). Sie bestehen im wesentlichen aus einem Organopolysiloxan mit mindestens zwei, direkt an die Siliciumatome eines Moleküls gebundenen Vinylgruppen, einem Organohydrogenpolysiloxan mit mindestens zwei direkt an die Siliciumatome eines Moleküls gebundenen Wasserstoffatomen, einem Platinkatalysator und evtl. Füllstoff und weiteren Additiven.

Diese Organopolysiloxan-Mischungen können jedoch nicht als sogenanntes Einkomponentensystem während längerer Zeiträume ohne zu gelieren gelagert werden. Sie beginnen häufig schon beim Mischen mit der Vernetzungsreaktion und vergelen innerhalb weniger Stunden bei Raumtemperatur.

Es ist daher bei solchen Organopolysiloxan-Mischungen üblich, das Vinylgruppen-haltige Polysiloxan, den Füllstoff und den Platinkatalysator in einer Komponente und das Wasserstoff-haltige Polysiloxan in einer zweiten Komponente zusammenzufassen. Wenn der Hersteller oder Verwender des Materials ein gehärtetes Produkt herstellen will, dann vermischt er die beiden Komponenten in spezifischen Anteilen, bringt die Mischung in die gewünschte Form und lässt sie entweder bei Zimmertemperatur oder bei erhöhter Temperatur in Zeiträumen von wenigen Sekunden bis mehreren Stunden härten.

Die oben beschriebenen Mischungen werden normalerweise als zwei Komponenten vertrieben und als additionsvernetzende Organopolysiloxan-Mischungen oder als Platin-katalysierte Polysiloxanmischungen bezeichnet. Diese Arten von Mischungen können entweder bei Zimmertemperatur über eine längere Zeitdauer wie 1 bis 12 Stunden nach dem Vermischen der beiden Komponenten oder während einer kürzeren Zeit durch Erhitzen auf Temperaturen oberhalb von 100 oder 200°C gehärtet werden.

Nach dem Vermischen der beiden Komponenten miteinander und vor dem Verfestigen ist es erwünscht, eine möglichst lange Topfzeit, mindestens jedoch eine Verarbeitungszeit von 12 bis 72 Stunden, zu haben. Um dies zu erreichen, wird eine Vielzahl von Massnahmen beschrieben, die alle auf eine Verzögerung bzw. Inhibierung der katalytischen Wirkung der Platinverbindung bei Raumtemperatur abzielen, ohne die katalytische Wirksamkeit in der Hitze zu mindern.

Zum Teil gelingt dies mit komplexen Platinverbindungen, die spezielle Liganden enthalten, wie Acetylaceton, organische Phosphor- oder Aminophosphinverbindungen oder die nach speziellen Verfahren hergestellt sind.

Solche speziellen Platinkatalysatoren sind z.B. in den Dokumenten US-PS 3 188 300, US-PS 3 522 327, DE-OS 2 131 740, US-PS 3 723 497, DE-OS 2 539 239 und DE-OS 2 809 875 beschrieben.

Zum anderen Teil wird die Härtungsreaktion bei Raumtemperatur durch Zusatz von sogenannten Inhibitoren verzögert. Die Verwendung einer Vielzahl solcher Verbindungen ist z.B. beschrieben:

| | |
|---|---|
| z.B.: org. Amin- und Amidverbindungen | in US-PS 3 188 299 |
| Verbindungen mit acetylenischen Bindungen | in US-PS 3 445 420 |
| die Verwendung von Perschlorethylen als Lösungsmittel | in US-PS 3 383 356 |
| SiVi-haltige Silazan-Verbindungen | in US-PS 3 453 233 |
| Tetramethylguanidino-carboxylat | in DE-OS 1 900 968 |
| $Sn^{II}$, $Hg^{II}$, $Bi^{II}$, $Cu^{I}$ u. $Cu^{II}$-Salze | in DE-OS 1 900 969 |
| organische Sulfoxide | in US-PS 3 453 234 |
| Benzotriazol | in DE-OS 1 926 575 |
| Vinylgruppenreiche Siloxan-copolymere | in DE-OS 2 040 386 |
| Oxim-Verbindungen | in DE-OS 2 210 380 |
| ethylenisch ungesättigte Isocyanurate (Triallylisocyanurat) | in DE-OS 2 454 257 |
| Hydrazinverbindungen und org. Peroxide | in DE-OS 2 502 936 |
| Cyclische Polymethylvinyl-siloxane | in DE-OS 3 923 705 |
| Acrylnitril | in DE-OS 2 550 744 |
| Reaktionsprodukte aus Hydrogen-polysiloxanen | in DE-OS 2 529 781 DE-OS 2 529 782 |
| und Alkoholen mit acetylenischen Bindungen | DE-OS 2 554 001 |
| Diaziridin | in DE-OS 2 515 484 |
| Butinol | in DE-OS 2 616 672 |
| Me-Butenol | in DE-OS 3 989 668 |
| Umsetzungsprodukten aus Alkoholen mit acetylenischen Bindungen und Isocyanaten | in DE-OS 2 653 580 |
| organische Peroxide | in US-PS 4 020 014 |
| organische Hydroperoxide | in DE-OS 2 715 544 |
| niedermolekulare Siloxanöle mit $Me_2ViSiO_{1/2}$-Endgruppen | in DE-OS 2 646 726 |
| Amido-Siloxanverbindungen | in DE-OS 2 917 963 |

$$\begin{array}{c} | \ \ S- \\ -S-C \Big< \quad \text{-Verbindungen} \quad \text{in DE-OS 2 824 630} \\ \ \ \ \ \ N= \end{array}$$

und

___

tertiäre Amine          in DE-OS 3 016 093

Wenn ein Inhibitor verwendet wird, müssen die Menge des Inhibitors und des Platinkatalysators genau aufeinander abgestimmt sein, um die beabsichtigte Verzögerung der Vernetzungskinetik bei niedrigen Temperaturen zu erreichen. Darüber hinaus ist die Lagerstabilität abhängig von der Art des katalysierten Systems, von der chemischen Natur des Inhibitors und des Platinkatalysators. Es ist daher mühsam und manchmal äusserst schwierig, den am besten geeigneten Katalysator und Inhibitor für die jeweils in Frage kommende Organopolysiloxan-Mischung auszuwählen und in den richtigen Mengenverhältnissen einzusetzen, um das gewünschte Resultat zu erzielen.

Weiterhin handelt es sich bei den oben beschriebenen Inhibitoren teilweise um Substanzen, die toxisch und übelriechend sind, deren Herstellung teilweise schwierig oder sogar explosionsgefährlich ist und die teilweise bei der Aushärtung verdampfen und/oder giftige und übelriechende (Spalt)produkte liefern und/oder die Qualität des Endproduktes beeinträchtigen. Einige dieser Inhibitoren sind bei Raumtemperatur relativ leicht flüchtig, so dass zur Verpackung der inhibierten Mischung luftdichte Behälter erforderlich sind. Ein Verdampfen des Inhibitors an der Oberfläche der Organopolysiloxan-Mischung kann zu vorzeitiger Härtung bei Raumtemperatur, zur Hautbildung oder zur Verschlechterung der Oberflächeneigenschaften des Endproduktes führen. Eine Verschlechterung der Oberflächeneigenschaften kann aber auch durch das plötzliche Verdampfen dieser Inhibitoren bei der Hitzehärtung erfolgen.

Bleiben dagegen merkliche Mengen dieser Inhibitoren oder deren Spaltprodukte im Endprodukt enthalten, so kann dies nicht nur zur einer optischen geruchlichen und/oder toxischen Beeinträchtigung, sondern auch zu einer Verschlechterung des Brandverhaltens der Endprodukte führen.

Weiterhin können nicht, oder nur wenig flüchtige Inhibitoren beim Erhitzen zu einer ungenügenden Aushärtung, bzw. je nach der Schichtdicke des Endproduktes und der Flüchtigkeit des Inhibitors zu einer inhomogenen Aushärtung führen.

Ausserdem ist die Wirksamkeit dieser Inhibitoren teilweise zu gering oder die erforderliche Dosierung zu hoch, um in der Praxis befriedigende Resultate zu erreichen.

Die Aufgabe der Erfindung besteht darin, eine Organopolysiloxan-Mischung der eingangs genannten Art zu schaffen, die ohne diese Nachteile über längere Zeiträume hinweg gelagert werden kann.

Gegenstand der Erfindung sind hitzehärtbare Organopolysiloxan-Mischungen, welche durch Anlagerung von Si-gebundenem Wasserstoff an aliphatische Mehrfachbindung härtbar sind, enthaltend:

a) ein Organopolysiloxan, oder Gemische von solchen, das in einem Molekül wenigstens zwei direkt an die Siliciumatome gebundene aliphatisch ungesättigte einwertige Kohlenwasserstoffgruppen aufweist,

b) ein Organohydrogenpolysiloxan, oder Gemische von solchen, das in einem Molekül wenigstens zwei direkt an die Siliciumatome gebundene Wasserstoffatome aufweist,

c) gegebenenfalls Füllstoffe, Pigmente, Dispergierhilfsmittel, haftungsfördernde Hilfsmittel und weitere Additive und

d) einen Katalysator, insbesondere eine katalytische Menge Platin oder einer Platinverbindung, dadurch gekennzeichnet, dass der Katalysator (4) in einer Konzentration von 0,01-5%, gerechnet als Metall, gleichmässig in einer festen Substanz (e) enthalten ist und wobei der den Katalysator enthaltende Feststoff (f) einen Schmelzpunkt bzw. Erweichungspunkt zwischen 70 und 250°C besitzt, mit dem Gemisch der Komponenten (a) und (b) unterhalb des Schmelzpunktes bzw. Erweichungspunktes praktisch unlöslich ist und in diesem Gemisch fein dispergierbar ist.

Aliphatische Mehrfachbindung kann auch in den erfindungsgemässen Organopolysiloxan-Mischungen, in den gleichen Verbindungen mit aliphatischer Mehrfachbindung vorliegen, wie in den bisher bekannten Organopolysiloxan-Mischungen, die durch Anlagerung von Si-gebundenem Wasserstoff an aliphatische Mehrfachbindung härtbar sind.

Es handelt sich bei diesen Organopolysiloxanen meist um solche aus Einheiten der allgemeinen Formel

$$R^1_X \, SiO_{\frac{4-x}{2}} \ ,$$

worin $R^1$ gleiche oder verschiedene, einwertige, gegebenenfalls substituierte Kohlenwasserstoffreste bedeutet, wobei in jedem Molekül mindestens 2 der Reste $R^1$, vorzugsweise jedoch höchstens 50% der Anzahl der Reste $R^1$, aliphatische Mehrfachbindungen aufweisen und x gleich 0, 1, 2 oder 3, durchschnittlich jedoch 0,75 bis 3,0 einschliesslich ist.

Der Si-gebundene Wasserstoff kann ebenfalls auch in den erfindungsgemässen Massen in den gleichen Verbindungen mit Si-gebundenem Wasserstoff vorliegen wie in den bisher bekannten Organopolysiloxanmassen, welche durch Anlagerung von Si-gebundenem Wasserstoff an aliphatische Mehrfachbindung härtbar sind. Es handelt sich bei diesen Verbindungen meist um solche aus Einheiten der allgemeinen Formel

$$R^2_Y \, SiO_{\frac{4-y}{2}} \ ,$$

worin $R^2$ Wasserstoff oder gleiche oder verschiedene, einwertige, gegebenenfalls substituierte Kohlenwasserstoffreste bedeutet, wobei mindestens 2, vorzugsweise mindestens 3, Si-gebundene Wasserstoffatome je Molekül dieser Verbindungen vorhanden sind und y gleich 0, 1, 2 oder 3, vorzugsweise durchschnittlich mindestens 1, ist, mit der weiteren Massgabe, dass in diesen Einheiten durchschnittlich mindestens soviel organische Reste wie Si-gebundene Wasserstoffatome vorliegen.

Si-gebundener Wasserstoff liegt in den erfindungsgemässen Massen vorzugsweise in Mengen von 0,6 bis 2,5 Si-gebundenen Wasserstoffatomen je aliphatischer Mehrfachbindung vor.

Aliphatische Mehrfachbindung und Si-gebundener Wasserstoff können in verschiedenen Arten oder in ein und derselben Art von Organosiliciumverbindung vorliegen.

Vorzugsweise enthalten die gegebenenfalls substituierten Kohlenwasserstoffreste $R^1$ und $R^2$ jeweils 1 bis 18 Kohlenstoffatome. Beispiele für solche, von aliphatischen Mehrfachbindungen freie Kohlenwasserstoffreste $R^1$ und $R^2$ sind Alkylreste, wie der Methyl-, Ethyl-, n-Propyl- und Isopropylrest sowie Octadecylreste; Cycloalkylreste, wie der Cyclohexyl- und Cycloheptylrest; Arylreste, wie der Phenylrest; Alkarylreste, wie Tolylreste; und Aralkylreste, wie der Benzyl- und der beta-Phenylethylrest. Als Beispiele für substituierte, von aliphatischen Mehrfachbindungen freie Kohlenwasserstoffreste $R^1$ und $R^2$ seien halogenierte Kohlenwasserstoffreste, wie der 3,3,3-Trifluorpropylrest und o-, p- und m-Chlorphenylreste, sowie Cyanalkylreste, wie der beta-Cyanethylrest, genannt. Wegen der leichteren Zugänglichkeit sind vorzugsweise mindestens 50% der Anzahl der nicht aus Si-gebundenem Wasserstoff bestehenden Reste $R^2$ und mindestens 50% der Anzahl der von aliphatischen Mehrfachbindungen freien Reste $R^1$ Methylreste.

Beispiele für Kohlenwasserstoffreste $R^1$ und $R^2$ mit aliphatischen Mehrfachbindungen sind der Ethinyl-, Vinyl-, Allyl-, Methallyl-, Cyclopentenyl- und Butadienylrest. Der Vinylrest ist bevorzugt, wegen seiner relativ leicht en technischen Zugänglichkeit.

Bei den Organopolysiloxanen kann es sich um Harze, Öle oder Kautschuke bzw. deren Mischungen oder um Copolymere handeln.

Bei Verwendung eines Harzes, ist darauf zu achten, dass dieses möglichst frei von Verbindungen oder molekularen Gruppen mit aktiven Wasserstoffatomen ist, um die Möglichkeit der Bildung von Wasserstoffgas und daraus resultierender Fehler im ausgehärteten Produkt zu verhindern.

Zusätzlich zu Organosiliciumverbindung(en) mit Si-gebundenem Wasserstoff und aliphatischer Mehrfachbindung und einer katalysatorhaltigen Dispersion einer festen Substanz, können auch die erfindungsgemässen hitzehärtbaren Organopolysiloxan-Mischungen, Stoffe enthalten, die auch in den bisher bekannten Organopolysiloxan-Mischungen, welche durch Anlagerung von Si-gebundenem Wasserstoff an aliphatische Mehrfachbindung härtbar sind, vorliegen konnten. Beispiele für solche zusätzlichen Stoffe sind Füllstoffe wie pyrogen erzeugtes Sili-ciumdioxyd, gefällte Kieselsäure, Quarzmehl, Silicate, Diatomeenerde, Calciumcarbonat, Glasfasern, elektrisch leitfähig machende Stoffe, wie Russe oder Metallpulver, Pigmente, lösliche Farbstoffe, Weichmacher, Dispergierhilfsmittel, Mittel zur Verbesserung der Haftung, der aus den Organopolysiloxan-Mischungen erzeugten elastischen oder nicht elastischen Produkte auf den Unterlagen, auf denen diese Produkte erzeugt wurden, ferner entflammungshemmende Additive und Stabilisatoren gegen die Alterung bei erhöhten Temperaturen. Bei den Füllstoffen kann es sich um verstärkende oder nicht verstärkende Füllstoffe handeln, um solche die vorher mit Organochlorsiloxanen und um solche die beim Einmischen oder vorher mit Cyclosiloxanen, Siloxanolen, Silazanen, Alkoxysilanen oder Alkoxysiloxanen behandet worden sind.

Als die Anlagerung von Si-gebundenem Wasserstoff an aliphatische Mehrfachbindung fördernde Katalysatoren können die erfindungsgemässen Organopolysiloxan-Mischungen ebenfalls die gleichen Katalysatoren enthalten wie sie auch in den bisher bekannten Organopolysiloxanmassen, welche durch Anlagerung von Si-gebundenem Wasserstoff an aliphatische Mehrfachbindung härtbar sind, vorliegen konnten. Beispiele für solche Katalysatoren sind metallisches und feinverteiltes Platin, Ruthenium, Rhodium, Palladium und Iridium, wobei sich diese Metalle jeweils auf Trägern, wie Siliciumdioxyd, Aluminiumoxyd oder Aktivkohle, befinden können und Verbindungen oder Komplexe aller dieser Elemente, wie Platinhalogenide, z.B. $PtCl_4$, $PtCl_6 \cdot 6 H_2O$, komplexgebundenes Wasser enthaltendes $Na_2PtCl_4$, Platin-Olefin-Komplexe, Platin-Alkohol- oder Platin-Alkoholat-Komplexe, Platin-Aldehyd-Komplexe, Platin-Vinylsiloxan-Komplexe, Platin-Divinyl-tetramethyldisiloxankomplexe, mit oder ohne Gehalt an nachweisbarem Halogen, Bis-(gamma-picolin)-platindichlorid und Trimethylenpyridin-platindichlorid.

Bevorzugt werden Platinkatalysatoren, wie sie in DE-AS 1 257 752 und US-PS 2 823 218 beschrieben sind.

Als feste, dispergierbare Substanzen, die einen Platinkatalysator enthalten und einen Schmelzpunkt bzw. Erweichungspunkt zwischen 70 und 250°C besitzen, eignen sich eine Vielzahl glasartig oder kristallin erstarrender Stoffe. Dazu gehören Thermoplaste wie z.B. Siliconharze oder Polyesterharze deren Erweichungspunkt zwischen 70 und 250°C liegt und organische Verbindungen wie z.B. Octaphenylcyclotetrasiloxan, Tribenzamid oder Triphenylphosphinoxid, die einen Schmelzpunkt zwischen 70 und 250°C besitzen oder Mischungen dieser Substanzen mit einem Erweichungspunkt bzw. Schmelzpunkt zwischen 70 und 250°C.

Bevorzugt sind feste Siliconharze und insbesondere solche, welche direkt an die Siliciumatome gebundene aliphatisch ungesättigte einwertige Kohlenwasserstoffgruppen aufweisen.

Die Herstellung der erfindungsgemässen, festen, dispergierbaren Substanzen, die einen Schmelzpunkt bzw. Erweichungspunkt zwischen 70 und 250°C besitzen und einen Platinkatalysator homogen verteilt enthalten, geschieht bevorzugt dadurch, dass man eine Lösung der festen Substanz in einem geeigneten organischen Lösungsmittel, wie z.B. Toluol, mit der entsprechenden Menge einer Platinkatalysator-Lösung, wie z.B. in der US-PS 2 823 218 beschrieben wird, vermischt und die resultierende homogene Lösung unter ständigem Durchmischen im Vakuum vom Lösungsmittel befreit. Man erhält so einen Feststoff, der den Platinkatalysator homogen verteilt enthält. Vor Gebrauch wird dieser Feststoff noch hinreichend klein gemahlen und vorzugsweise durch ein Sieb mit einer Maschenweite von 100 $\mu$m

klassifiziert. Das resultierende feinteilige Pulver enthält 0,01-5% Platin, gerechnet als Metall, und lässt sich gut in den obigen Polysiloxanverbindungen dispergieren.

Die obengenannten festen Substanzen stellen eine Auswahl dar, die durch den Fachmann im Bedarfsfalle zweckentsprechend erweitert werden kann.

Wesentlich im Sinne der Erfindung sind dabei folgende Merkmale:

— Die den Katalysator enthaltende feste, dispergierte Substanz soll den Platinkatalysator bei Raumtemperatur örtlich immobilisieren und erst beim Erhitzen auf 70 bis 250°C wirksam werden lassen;

— sie soll in der dispergierten festen Form mit den obigen Organopolysiloxanmischungen praktisch unlöslich sein;

— nach dem Aufschmelzen bzw. Erweichen, kann sie in den obigen Organopolysiloxanen löslich sein, und gegebenenfalls mit diesen covernetzen, ohne dass dies erfindungsgemäss erforderlich ist;

— die feste Substanz darf, wie auch alle anderen Zutaten, kein Katalysatorgift enthalten, welches eine Vulkanisation beim Erhitzen verhindern würde;

— die feste Substanz soll möglichst keine oder nur wenige aktive Wasserstoffatome enthalten, die sich mit den « = SiH-Gruppen» im Sinne einer Nebenreaktion unter Bildung von Wasserstoff umsetzen können;

— die feste Substanz soll möglichst wärmestabil sein und die Eigenschaften des Endproduktes möglichst nicht negativ beeinflussen;

— der Platinkatalysator kann in der Festsubstanz gelöst oder gleichmässig dispergiert sein, wesentlich ist dabei nur, dass der Katalysator bei Raumtemperatur örtlich in der festen Substanz immobilisiert ist.

Die Herstellung der erfindungsgemäss bevorzugten festen Siliconharze ist bekannt und kann zum Beispiel wie in den Patentschriften US-PS 2 482 276, DE-PS 958 702, US-PS 3 489 782 und DE-OS 2 832 945, oder wie bei G.H. Wagener et al., Industrial and Engineering Chemistry, 45, 367 (1953) und L.H. Vogt et al., Inorg. Chem., 2, 189 (1963), beschrieben, durchgeführt werden.

Die erfindungsgemässen hitzehärtbaren Organopolysiloxan-Mischungen können dort eingesetzt werden, wo der Einsatz von hitzehärtbaren Organosiloxan-Mischungen erwünscht ist. Mögliche Anwendungsgebiete sind z.B. Elastomere, Giess-, Tränk- und Imprägnierharze, Form-, Einbettungs- und Dichtungsmassen, Klebstoffe, Entformungs-, Trenn- und Beschichtungsmittel.

Im folgenden wird die Erfindung anhand von Beispielen näher erläutert. Angegebene Prozentsätze oder Teile beziehen sich jeweils auf das Gewicht, soweit nichts anders angegeben ist. Weiterhin bedeutet Me ein Methyl-, Ph ein Phenyl- und Vi ein Vinylrest.

### Herstellung eines Silicon-Festharzes

Zu einer Mischung aus 471 Teilen $H_2O$ dest., 123 Teilen Xylol und 41 Teilen n-Butanol wird unter schnellem Rühren und Kühlen eine Mischung aus 124 Teilen $PhSiCl_3$ (60 Mol-%), 43,8 Teilen $MeSiCl_3$ (30 Mol-%) und 13,8 Teilen $MeViSiCl_2$ (10 Mol-%) innerhalb von 30 Minuten zugefügt; danach lässt man absitzen, trennt, neutralisiert mit 5%iger NaHCO$_3$-Lösung, wäscht mit $H_2O$ dest., filtriert und destilliert das Lösungsmittel zunächst bei 50 mbar bis 150°C Sumpftemperatur, danach bei 3 mbar bis 150°C Sumpftemperatur ab. Anschliessend giesst man das flüssige Harz in einen flachen Behälter und lässt es erstarren. Das klare durchsichtige Harz wird zerbrochen und 6 Stunden bei 70°C und 30 mbar nachgetrocknet.

Das resultierende spröde Siliconharz besitzt einen Erweichungspunkt von 103°C; gemessen nach DIN 53 180.

### Herstellung einer Platinkatalysator enthaltenden festen Substanz

100 Teile des weiter oben beschriebenen festen Siliconharzes werden in 50 Teilen Toluol gelöst und zu dieser Lösung werden 10 Teile einer Platinkatalysatorlösung in iso-Propanol gegeben. Die Katalysatorlösung enthält 1% Pt, gerechnet als Metall, und war entsprechend US-PS 2 823 218 hergestellt worden. Die resultierende schwach gelbliche Flüssigkeit wird in einen Vakuumverdampfer gegeben und das Lösungsmittel während 12 Stunden bei 70°C und 30 mbar entfernt. Das danach erhaltene, klare, gelbliche Festharz wird gebrochen und weitere 12 Stunden bei 70°C und 30 mbar getrocknet. Nach dem Abkühlen wird es gemahlen und durch ein Sieb mit einer Maschenweite von 100 $\mu$m gegeben. Man erhält ein weisses Pulver, das klar aufschmilzt, einen Erweichungspunkt von 105°C besitzt, gemessen nach DIN 53 180, und welches 0,1% Platinkatalysator, gerechnet als Metall, enthält.

### Beispiel 1

Eine Organopolysiloxan-Mischung A wurde hergestellt, durch Vermischen von 55 Teilen eines Vinylendgruppen aufweisenden Polydimethylsiloxans, 15 Teilen eines Vinylgruppen aufweisenden Siliconharzes (aufgebaut aus: $SiO_2$, $MeSiO_{3/2}$, $PhSiO_{3/2}$, $MeSiO$, $Me_3SiO_{1/2}$ und $Me_2ViSiO_{1/2}$-Einheiten), 27 Teilen Quarzmehl und 3 Teilen pyrogenem $SiO_2$. Eine Organopolysiloxan-Mischung B wurde hergestellt durch Vermischen von 50 Teilen eines Organohydrogenpolysiloxans (aufgebaut aus: $SiO_2$, $MeSiO_{3/2}$, $MeHSiO$, $Me_2SiO$ und $Me_3SiO_{1/2}$-Einheiten), 25 Teilen eines Vinylendgruppen aufweisenden Polydimethylsiloxans und 25 Teilen Quarzmehl.

Eine Organopolysiloxan-Mischung C wurde hergestellt durch Vermischen von 85 Teilen der obigen Mischung A, 15 Teilen der obigen Mischung B und 1,42 Teilen des oben beschriebenen, gesiebten, Platinkatalysator enthaltenden Siliconharzpulvers. Dabei wurde das Siliconharzpulver zum Schluss zugemischt, wobei eine Temperatur von 50°C nicht überschritten wurde. Die so hergestellte Organopolysiloxan-Mischung C besass eine Viskosität von 93 000 mPas bei 23°C und enthielt 20 ppm Platinkatalysator, gerechnet als Platin.

Ein daraus hergestellter Prüfkörper wurde 20 Minuten bei 175°C gehärtet und besass danach eine Shore A Härte von 61.

Nach 5 Wochen Lgerung bei 23°C war die Organopolysiloxan-Mischung C praktisch unverändert. Die Viskosität betrug 95 000 mPas bei 23°C und ein 20 Minuten bei 175°C gehärteter Prüfkörper wies eine Shore A Härte von 62 auf.

*Vergleichsversuch 1*

Es wurde eine Organopolysiloxan-Mischung A der gleichen Zusammensetzung wie in Beispiel 1 hergestellt und mit 33,6 ppm eines gelösten Platinkatalysators, gerechnet als Metall, vermischt.

Der Platinkatalysator war entsprechend US-PS 3 775 452 hergestellt worden.

Eine Organopolysiloxan-Mischung C wurde hergestellt durch Vermischen von 85 Teilen der obigen katalysierten Mischung A, 15 Teilen Mischung B (wie in Beispiel 1 hergestellt) und 1,42 Teilen eines ge-siebten Siliconharzpulvers, das keinen Platinkataly-sator enthielt.

*Vergleichsversuch 2*

Es wurde wie in Vergleichsversuch 1 verfahren, mit der Ausnahme, dass kein Siliconharzpulver zugefügt wurde.

Die Viskosität der Organopolysiloxan-Mischung C aus Vergleichsversuch 1 und 2 (unmittelbar nach der Herstellung gemessen) war vergleichbar der von Beispiel 1 und die Shore A Härte der 20 Minuten bei 175°C gehärteten Prüfkörper entsprach der von Beispiel 1. Im Unterschied zu Beispiel 1 waren die Organopolysiloxan-Mischungen aus Vergleichsversuch 1 und 2 jedoch schon nach weniger als 3 Stunden Lagerung bei 23°C vernetzt.

**Patentansprüche**

1. Hitzehärtbare Organopolysiloxan-Mischungen, mit guter Lagerstabilität bei Raumtemperatur, welche durch Anlagerung von Si-gebundenem Wasserstoff an aliphatische Mehrfachbindung härtbar sind, enthaltend
a) ein Organopolysiloxan, oder Gemische von solchen, das in einem Molekül wenigstens zwei direkt an die Siliciumatome gebundene aliphatisch ungesättigte einwertige Kohlenwasserstoffgruppen aufweist,
b) ein Organohydrogenpolysiloxan, oder Gemische von solchen, das in einem Molekül wenigstens zwei direkt an die Siliciumatome gebundene Wasserstoffatome aufweist,
c) gegebenenfalls Füllstoffe, Pigmente, Dispergierhilfsmittel, haftungsfördernde Hilfsmittel und weitere Additive und
d) einen Katalysator, insbesondere eine katalytische Menge Platin oder einer Platinverbindung, dadurch gekennzeichnet, dass der Katalysator in einer Konzentration von 0,01-5%, gerechnet als Metall, gleichmässig in einer festen Substanz (e) enthalten ist und wobei der den Katalysator enthaltende Feststoff (f) einen Schmelzpunkt bzw. Erweichungspunkt zwischen 70 und 250°C besitzt, mit dem Gemisch der Komponenten (a) und (b) unterhalb des Schmelzpunktes bzw. Erweichungspunktes praktisch unlöslich ist und in diesem Gemisch fein dispergierbar ist.

2. Hitzehärtbare Organopolysiloxan-Mischungen nach Anspruch 1, dadurch gekennzeichnet, dass der den Platinkatalysator enthaltende Feststoff (f) ein Siliconharz ist.

3. Hitzehärtbare Organopolysiloxan-Mischungen nach Anspruch 1 und 2, dadurch gekennzeichnet, dass der den Platinkatalysator enthaltende Feststoff (f) ein Siliconharz ist, welches Kohlenwasserstoffre-ste mit aliphatischen Mehrfachbindungen, bevor-zugt Vinylreste, enthält.

4. Hitzehärtbare Organopolysiloxan-Mischungen nach Anspruch 1, dadurch gekennzeichnet, dass der den Platinkatalysator enthaltende Feststoff (f) eine organische Substanz ist, welche kein Silicium enthält.

**Claims**

1. Heat-curable organopolysiloxane mixtures with good storage stability at room remperature, which can be cured by the addition of Si-bonded hydrogen on to an aliphatic multiple bond, containing
a) an organopolysiloxane, or mixtures of such organopolysiloxanes, which contains in one molecule at least two aliphatic unsaturated monovalent hydrocarbon groups directly bonded to the silicon atoms,
b) an organohydrogenpolysiloxane, or mixtures of such organohydrogenpolysiloxanes, which contains in one molecule at least two hydrogen atoms directly bonded to the silicon atoms,
c) optionally, fillers, pigments, dispersing auxiliaries, adhesion-promoting auxiliaries and other additives and
d) a catalyst, in particular a catalytic amount of platinum or a platinum compound, characterised in that the catalyst is contained uniformly, in a concentration of 0.01-5%, calculated as metal, in a solid substance (e) and wherein the solid (f) containing the catalyst has a melting point of softening point between 70 and 250°C, is virtually insoluble in the mixture of components (a) and (b) below the melting point of softening point, and is finely dispersible in this mixture.

2. Heat-curable organopolysiloxane mixtures according to Claim 1, characterised in that the solid (f) containing the platinum catalyst is a silicon resin.

3. Heat-curable organopolysiloxane mixtures according to Claim 1 and 2, characterised in that the solid (f) containing the platinum catalyst is a silicon resin which contains hydrocarbon radicals having aliphatic multiple bonds, preferably vinyl radicals.

4. Heat-curable organopolysiloxane mixtures according to Claim 1, characterised in that the solid (f) containing the platinum catalyst is an organic substance which does not contain any silicon.

**Revendications**

1. Mélanges d'organopolysiloxanes durcissables à chaud, doués d'une bonne stabilité à l'entreposage à la température ambiante, qui peuvent être durcis par addition d'hydrogène lié à du silicium sur une liai-son multiple aliphatique, contenant

a) un organopolysiloxane, ou des mélanges de tels composés, qui présente dans une molécule, au moins deux groupes hydrocarbonés monovalents à insaturation aliphatique, directement liés aux atomes de silicium,

b) un organohydrogénopolysiloxane, ou des mélanges de tels composés, qui présente dans une molécule au moins deux atomes d'hydrogène directement liés aux atomes de silicium,

c) le cas échéant des charges, des pigments, des adjuvants de dispersion, des adjuvants accélérant l'adhérence et d'autres additifs et

d) un catalyseur, notamment une quantité catalytique de platine ou d'un composé de platine, caractérisés en ce que le catalyseur est contenu à une concentration de 0,01-5%, exprimée en métal, uniformément dans une substance solide (e), et la matière solide (f) contenant le catalyseur possède un point de fusion ou un point de ramollissement entre 70 et 250°C, est pratiquement insoluble avec le mélange des composants (a) et (b) au-dessous du point de fusion au du point de ramollissement et peut former une fine dispersion dans ce mélange.

2. Mélanges d'organopolysiloxanes durcissables à chaud suivant la revendication 1, caractérisés en ce que la substance solide (f) contenant le catalyseur au platine est une résine siliconée.

3. Mélanges d'organopolysiloxanes durcissables à chaud suivant les revendications 1 et 2, caractérisés en ce que la matière solide (f) contenant le catalyseur au platine est une résine siliconée qui contient des restes hydrocarbonés présentant des liaisons multiples aliphatiques, de préférence des restes vinyle.

4. Mélanges d'organopolysiloxanes durcissables à la chaleur suivant la revendication 1, caractérisés en ce que la matière solide (f) contenant le catalyseur au platine est une substance organique qui ne contient pas de silicium.